# EUROPEAN PATENT SPECIFICATION

(11) **EP 4 391 622 B1**
(45) Date of publication and mention of the grant of the patent: **03.09.2025**
(21) Application number: 22950218.2
(22) Date of filing: 06.07.2022
(51) Int. Cl.: H04W 16/18, H04W 24/02, H04W 88/08, H04W 88/18

(54) **INFORMATION PROCESSING DEVICE, INFORMATION PROCESSING METHOD, AND PROGRAM**
INFORMATIONSVERARBEITUNGSVORRICHTUNG, INFORMATIONSVERARBEITUNGSVERFAHREN UND PROGRAMM
DISPOSITIF DE TRAITEMENT D'INFORMATIONS, PROCÉDÉ DE TRAITEMENT D'INFORMATIONS ET PROGRAMME

(43) Date of publication of application: 26.06.2024
(73) Proprietor: Rakuten Group, Inc., Setagaya-ku Tokyo 158-0094 (JP)
(72) Inventor: TIAN, Ke, Tokyo 158-0094 (JP); ONYALI, Julian, Tokyo 158-0094 (JP); KANDO, Kiyohiko, Tokyo 158-0094 (JP); KATO, Seiichi, Tokyo 158-0094 (JP); YI, Zhiqing, Tokyo 158-0094 (JP)
(74) Representative: Hoffmann Eitle
(86) International application number: PCT/JP2022/026811
(87) International publication number: WO 2024/009424

(56) References cited:
- EP-A1- 3 672 118
- EP-A1- 3 672 118
- JP-A- 2020 061 613
- JP-A- 2021 069 020
- US-A1- 2019 150 006
- US-A1- 2021 199 789
- US-A1- 2022 166 530

## Description

### TECHNICAL FIELD

The present invention relates to an information processing apparatus, an information processing method, and a program thereof, and in particular to a technique for detecting a site appropriate for wireless base station placement.

### BACKGROUND ART

In wireless communication systems, typically, a broad area is divided into wireless cells (small zones), and one wireless base station (base station) is placed for one or more wireless cells. Base stations placed outdoors have at least one antenna, and wireless communication with a wireless terminal is realized via the antenna. Because the environment of radio waves emitted from the antenna affects the communication quality at the wireless terminal, the base station needs to be placed in an area where the communication quality at the wireless terminal can be kept good, such as an area where line-of-sight communication with the wireless terminal is possible.

Patent Literature Document 1 discloses a system in which a candidate area including a service area for which radio wave propagation from a base station is desired is divided into grids, the coverage of the service area is digitalized based on the result of a radio wave propagation simulation conducted when the base station is placed at a central position of the grids, and a site candidate for base station placement is selected from among a plurality of sites that satisfy a predetermined coverage, with reference to predetermined conditions. Patent Literature Document 2 discloses a data processing device comprising: acquisition means for acquiring an aircraft image; and determination means for determining whether or not an area is a site appropriate for base station placement.

### LISTING OF REFERENCES

### PATENT LITERATURE DOCUMENT

Patent Literature Document 1: JP 2019-198051A
Patent Literature Document 2: US 2021/199789 A1 (MACHIDA AKINORI [JP]) 1 July 2021 (2021-07-01)

### SUMMARY OF THE INVENTION

### PROBLEMS TO BE SOLVED BY THE INVENTION

However, in the technique disclosed in Patent Literature Document 1, the larger the number of wireless terminals or the number of areas where wireless communication is to be supported is, the larger the number of service areas (numerical information relating to degrees of latitude and longitude) to be input is. This arises the problem that the processing load for selecting a site candidate for base station placement increases.

The present invention was made to solve the above-described problem, and it is an object thereof to effectively determine a site appropriate for base station placement.

### SOLUTION TO THE PROBLEMS

The invention is set out in the appended claims.

### ADVANTAGEOUS EFFECTS OF THE INVENTION

According to the present invention, it is possible to effectively determine a site appropriate for base station placement.

The object, aspects, and effects of the present invention described above, as well as objects, aspects, and effects of the present invention that are not described above can be understood by those skilled in the art from the embodiments of the present invention described below by referring to the accompanying drawings and the scope of the claims.

### BRIEF DESCRIPTION OF THE DRAWINGS

Fig. 1 illustrates an example of a functional configuration of an information processing apparatus.
Fig. 2 illustrates an example of a hardware configuration of the information processing apparatus.
Fig. 3 is a conceptual diagram illustrating image patch generation.
Fig. 4 is a conceptual diagram illustrating an open area estimated by applying a satellite image to an open area prediction model.
Fig. 5A is a conceptual diagram illustrating an openness calculation procedure.
Fig. 5B is a conceptual diagram illustrating an openness calculation procedure.
Fig. 5C is a conceptual diagram illustrating an openness calculation procedure.
Fig. 6 is a flowchart illustrating processing executed by the information processing apparatus.
Fig. 7 illustrates examples of placement candidate information displayed on a display unit.

### DESCRIPTION OF EMBODIMENTS

Embodiments of the present invention will now be described in detail with reference to the accompanying drawings. Out of the component elements described below, elements with the same functions have been assigned the same reference numerals, and description thereof is omitted. Note that the embodiments disclosed below are mere example implementations of the present invention, and it is possible to make changes and modifications as appropriate according to the configuration and/or various conditions of the apparatus to which the present invention is to be applied. Accordingly, the present invention is not limited to the embodiments described below. The combination of features described in these embodiments may include features that are not essential when implementing the present invention.

### Functional Configuration of Information Processing Apparatus 10

An information processing apparatus 10 according to the present embodiment estimates (predicts) an open area based on acquired satellite image data using a trained open area prediction model, and calculates the openness of the open area. Then, the information processing apparatus 10 determines, based on the openness, whether or not the open area is a site appropriate for base station placement.

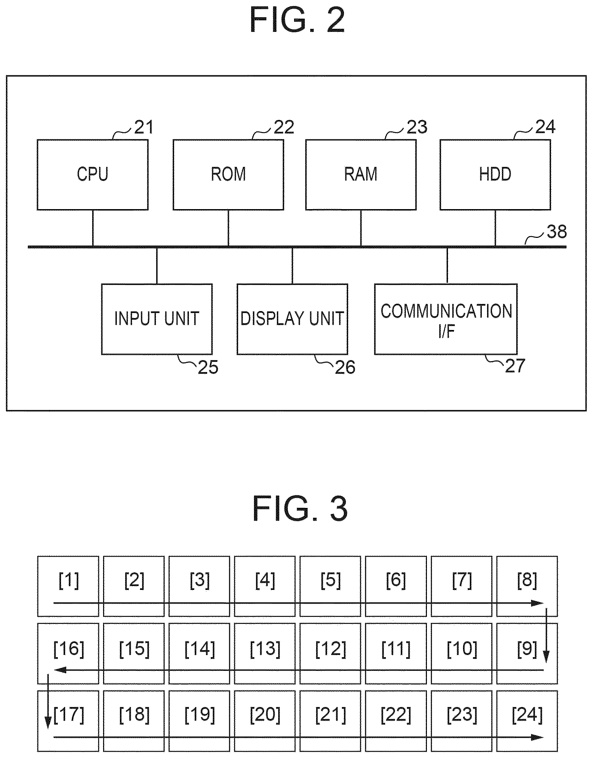

Fig. 2 is a block diagram showing an example of a functional configuration of the information processing apparatus 10 according to the present embodiment.

The information processing apparatus 10 shown in Fig. 2 includes an image data acquisition unit 101, an estimation unit 102, a construction data acquisition unit 103, an openness calculation unit 104, a determination unit 105, an output unit 106, and a learning model storage unit 110. The learning model storage unit 110 is configured to be able to store a trained open area prediction model 111.

The image data acquisition unit 101 acquires satellite image data (hereinafter, referred to as a "satellite image") using a suitable service (such as website or database). The image data acquisition unit 101 may acquire the satellite image through input of a user via an input unit (input unit 25 shown in Fig. 2). The satellite image can be acquired from various earth observation optical satellites and is acquired from, for example, the Sentinel-2, which is a European earth observation optical satellite. The satellite image from the Sentinel-2 can be added (updated) on a daily basis when it is available. The satellite image can be downloaded from a predetermined website relating to the optical satellite.

The estimation unit 102 estimates an open area by applying the satellite image acquired by the image data acquisition unit 101 to the trained open area prediction model 111 stored in the learning model storage unit 110. In the present embodiment, an open area refers to an area with a spatial extent where base station placement for wireless communication is possible, and a typical example thereof is an area (site) where obstacles or constructions are not closely spaced, such as a parking area or a building roof. The estimation unit 102 may divide the image of the area into a plurality of images to generate patch images, and may apply the patch images to the open area prediction model 111. Estimation processing performed by the estimation unit 102 will be described later. The open area estimated by the estimation unit 102 serves as a candidate area for base station placement.

The construction data acquisition unit 103 acquires information (construction height data) relating to the height of a construction from an external database. Furthermore, the construction data acquisition unit 103 is configured to also acquire altitude data from the external database. The construction height data and the altitude data are associated with position information (e.g., latitude and longitude) with which a position on map data (geographical data) can be identified. Accordingly, it is possible to acquire data on the height of constructions in the surroundings of the open area estimated by the estimation unit 102 and the altitude of the constructions. The construction height data and the altitude data are used for calculation of the openness performed by the openness calculation unit 104.

The openness calculation unit 104 calculates the openness of the open area estimated by the estimation unit 102. Openness indicates an index of spatial openness of the surroundings of the open area intended for base station placement (a degree of openness). Processing of calculating openness performed by the openness calculation unit 104 will be described later.

The determination unit 105 determines, based on the openness of the open area calculated by the openness calculation unit 104, whether or not the open area is a site appropriate for base station placement. When multiple openness of multiple open areas have been calculated, the determination unit 105 determines whether or not each of the open areas is a site appropriate for base station placement. Determination processing performed by the determination unit 105 will be described later.

The output unit 106 outputs the result of determination processing performed by the determination unit 105. For example, the output unit 106 outputs information relating to a site (open area) that was determined by the determination unit 105 as a site appropriate for base station placement. This "output" may be any output processing, and may be an output to an external apparatus via a communication I/F (communication I/F 27 shown in Fig. 2) or displaying on a display unit (display unit 26 shown in Fig. 2).

### Hardware Configuration of Information Processing Apparatus 10

Fig. 2 is a block diagram showing an example of the hardware configuration of the information processing apparatus 10 according to the present embodiment.

The information processing apparatus 10 according to the present embodiment can be implemented on a single or a plurality of any computers, mobile devices, or other processing platforms.

Although Fig. 2 shows an example in which the information processing apparatus 10 is implemented on a single computer, the information processing apparatus 10 of the present embodiment may be implemented on a computer system including a plurality of computers. The plurality of computers may be connected to each other via a wired or wireless network to enable communication between the computers.

As shown in Fig.2, the information processing apparatus 10 may include a CPU 21, a ROM 22, a RAM 23, an HDD 24, an input unit 25, a display unit 26, a communication I/F 27, and a system bus 28. The information processing apparatus 10 may also include an external memory.

The CPU (Central Processing Unit) 21 is adapted to perform overall control of operations of the information processing apparatus 10 and controls the constituent components (22 to 27) via the system bus 28, which is a data transmission path.

The ROM (Read Only Memory) 22 is a nonvolatile memory that stores control programs and the like that the CPU 21 needs to execute processing. Note that the programs may also be stored in a nonvolatile memory, such as the HDD (Hard Disk Drive) 24, an SSD (Solid State Drive), or an external memory, such as a removable storage medium (not shown).

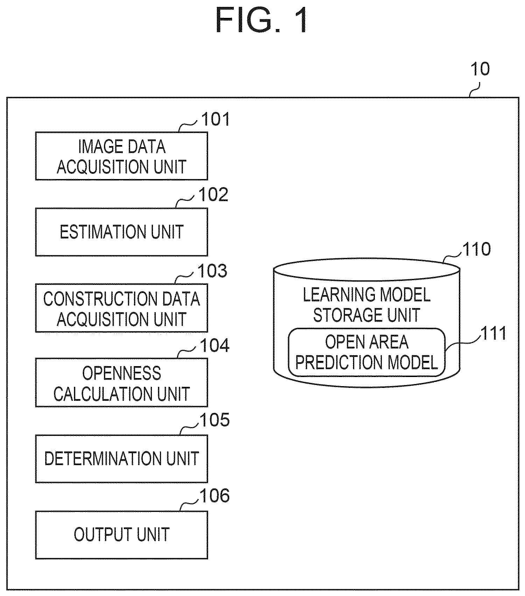

The RAM (Random Access Memory) 23 is a volatile memory and functions as the main memory, work area, and the like of the CPU 21. That is to say, when executing processing, the CPU 21 loads a required program or the like from the ROM 22 into the RAM 23 and executes the program or the like to implement various functional operations. The learning model storage unit 110 shown in Fig. 1 may be constituted by the RAM 23.

The HDD 24 stores, for example, various data, various information, and the like that the CPU 21 needs to perform processing using a program. The HDD 24 also stores various data, various information, and the like obtained by the CPU 21 performing processing using a program or the like.

The input unit 25 is composed of a keyboard and/or a pointing device, such as a mouse.

The display unit 26 is composed of a monitor, such as a liquid crystal display (LCD). When configured in combination with the input unit 25, the display unit 26 may also function as a GUI (Graphical User Interface).

The communication I/F 27 is an interface that controls communication between the information processing apparatus 10 and external apparatuses.

The communication I/F 27 provides an interface with the network and executes communication with external apparatuses via the network. Various data, various parameters, and the like are transmitted and received to and from external apparatuses via the communication I/F 27. In the present embodiment, the communication I/F 27 may perform communication via a wired LAN (Local Area Network) or a dedicated line that complies with a communication standard, such as Ethernet (registered trademark). However, the network that can be used in the present embodiment is not limited to this and may be configured as a wireless network. This wireless network includes a wireless PAN (Personal Area Network) such as Bluetooth (registered trademark), ZigBee (registered trademark), and UWB (Ultra Wide Band). The wireless network also includes a wireless LAN (Local Area Network) such as Wi-Fi (Wireless Fidelity) (registered trademark), and a wireless MAN (Metropolitan Area Network) such as WiMAX (registered trademark). In addition, the wireless network includes a wireless WAN (Wide Area Network) such as LTE/3G, 4G, and 5G. Note that it is sufficient for the network to connect devices to enable communication between them, and the communication standard, scale, and configuration are not limited to the above examples.

At least some functions of the elements of the information processing apparatus 10 shown in Fig. 1 can be realized by the CPU 21 executing a program. However, at least some of the functions of the elements of the information processing apparatus 10 shown in Fig. 1 may operate as dedicated hardware. In this case, the dedicated hardware operates under the control of the CPU 21.

### Open Area Estimation Procedure

An open area estimation procedure will be described. The estimation unit 102 applies the trained open area prediction model 111 stored in the learning model storage unit 110 to a satellite image acquired by the image data acquisition unit 101 to estimate at least one open area in the satellite image.

The open area prediction model 111 is a learning model for machine learning that can predict, upon input of a satellite image, at least one open area in the satellite image. The open area prediction model 111 is, for example, a learning model subjected to transfer learning of an object detection model such as Mask-RCNN trained using COCO dataset. Note that the object detection model is not limited to Mask-RCNN and other deep learning models may also be used. "COCO" refers to Common Objects in Context data set of Microsoft. In the present embodiment, the open area estimated by the open area prediction model 111 is defined as a parking area. That is to say, the open area prediction model 111 is a learning model that has trained, upon input of a satellite image, a parking area in the satellite image as a ground true label. Note that an open area is not limited to a parking area and, typically, an open area need only be a site where obstacles or constructions are not closely spaced, such as a building roof.

The estimation unit 102 applies the satellite image acquired by the image data acquisition unit 101 to the open area prediction model 111. In the present embodiment, the estimation unit 102 divides the satellite image into a plurality of image patches and applies the patch images to the open area prediction model 111, in order to reduce the calculation amount. Fig. 3 is a conceptual diagram showing image patch generation. In the example of Fig. 3, the estimation unit 102 divides the satellite image acquired by the image data acquisition unit 101 into image patches in 256 x 256 pixels to generate 24 patch images [1] to [24]. Note that the number of pixels of the image patches is not limited to a specific number.

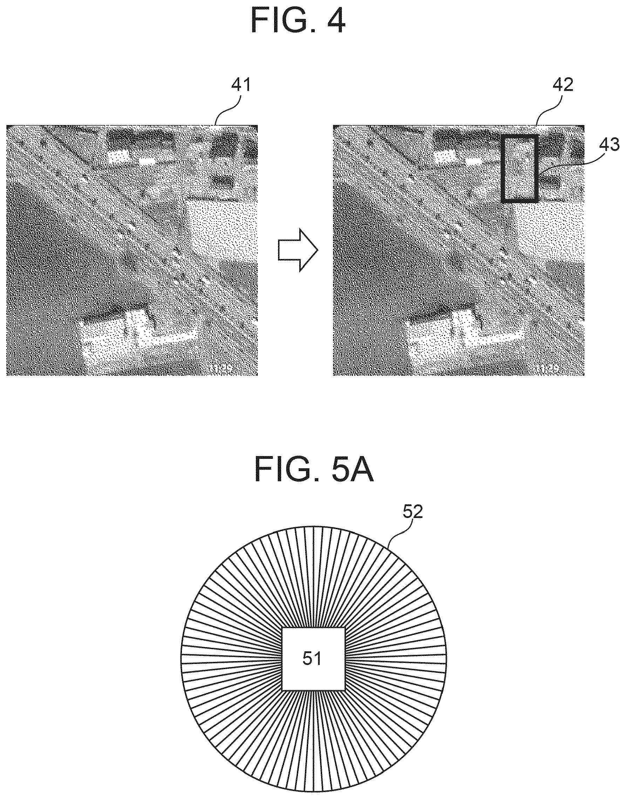

Fig. 4 is a conceptual diagram illustrating an open area (a parking area in the present embodiment) estimated by applying image patches (satellite images) to the open area prediction model 111. Upon input of a satellite image (image patch) 41, the open area prediction model 111 outputs an image 42 including an estimated open area 43. Note that when the open area is defined as a parking area, the open area prediction model 111 may be a learning model trained using, in addition to the combination of the satellite image and the ground true label (parking area), a dataset that includes road network information, in order to prevent roads from being estimated as open areas. Note that for open area estimation using machine learning, a human may confirm whether an estimated open area (the open area 43 in Fig. 4) is an area used as a parking area instead of a park, for example. In this case, the open area confirmed by the human may be output as the output of the estimation unit 102.

The open area estimated by the estimation unit 102 serves as a candidate area for base station placement. The open area estimated by the estimation unit 102 is converted into geographic coordinates on map data (geographical data), and the coordinates are output as information indicating the open area to the estimation unit 102. For example, four coordinates of the bounding box of the estimated open area are output as information indicating the open area to the estimation unit 102.

Note that although, in the present embodiment, the estimation unit 102 estimates an open area using machine learning, the estimation unit 102 may be configured to estimate an open area (e.g., a parking area or a building roof) from a satellite image using another known image processing technique.

### Openness Degree Calculation Procedure

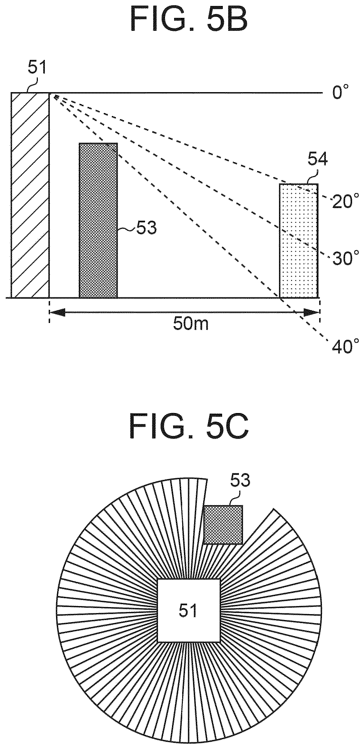

After the open area (candidate area for base station placement) has been estimated by the estimation unit 102, the openness calculation unit 104 calculates the openness of the candidate area. Openness indicates an index of spatial openness of the surroundings of the open area. The following will describe, with reference to Figs. 5, an openness calculation procedure. Figs. 5 are conceptual diagrams illustrating an openness calculation procedure.

First, the openness calculation unit 104 sets, in the open area, a predetermined number of rays that are cast in a predetermined range from a candidate position for base station placement. The rays are pseudo/virtual and are used for simulation of openness calculation. The openness calculation unit 104 calculates, as openness, the ratio of the lengths of rays remaining without being blocked by an obstacle to the entire lengths of the predetermined number of rays.

Fig. 5A is a conceptual diagram showing rays cast from the candidate position for base station placement. In Fig. 5A, the position (white rectangle in the center) of a future base station 51 may be located at or near the center of the open area. Note that in Fig. 5A, the position of the base station 51 is indicated as a position having a certain region expressed by a rectangle, but the position of the base station 51 may be expressed by a point or another shape such as a circle. Also, in the present embodiment, the rays are cast from the position of the base station 51 over 50 meters in the horizontal direction at intervals of azimuthal angle of 2 degrees. Accordingly, 180 rays (= 360/2) are set (at 0, 2, 4, ..., 358 degrees). A ray range 52 may be larger than the open area and may correspond to the range of cells for which services are provided. In the present embodiment, the rays are cast over 50 meters, but this is an example.

The openness calculation unit 104 calculates the height of a construction serving as an obstacle present in the ray range 52, based on the construction height data and the altitude data acquired by the construction data acquisition unit 103. Note that the height of a construction may be construction height data itself, but the value of the accurate height of the construction from the sea level can be obtained through calculation using the altitude data (by adding the value of the altitude data to the value of the construction height data).

Fig. 5B shows the positional relationship between the base station 51 and an obstacle. In the example of Fig. 5B, the rays are cast from the top of the base station 51 in a range of 50 meters in the horizontal direction. Note that the source from which the rays are cast is an end portion of the top of the base station 51 in Fig. 5B, but the source may be located at any position on the top of the base station 51. In Fig. 5B shows a case where the construction 53 and a construction 54, which serve as obstacles, are present within a range of 50 meters in the horizontal direction from the candidate position for placement of the base station 51. In this case, the openness calculation unit 104 detects a cross point between a ray cast from the base station 51 at a set depression angle (downward angle with respect to the horizontal direction. Hereinafter, referred to as "casting angle") and an obstacle. Then, the openness calculation unit 104 deletes (slices) a portion of the ray having the cross point that is located further than the cross point (that is, portion of the ray between the cross point and an end of the ray opposite to the casting source). If a plurality of cross points between the rays and the obstacle are detected, the cross point closer to the position of the base station 51 is used.

The height of the base station 51 may be set to a suitable value. The height of the base station 51 may include the height of the antenna provided in the base station 51. In the present embodiment, the open area is defined as a parking area, but if the open area is defined as a building roof, the height of the base station 51 includes the height of the building.

As shown in Fig. 5B, the cross point between a ray cast from the base station 51 and the obstacle varies according to the casting angle. In Fig. 5B, if the casting angle is 0 degrees, no cross point is detected between the ray and the construction 53 and between the ray and the construction 54. If the casting angle is 20 degrees or 30 degrees, a cross point between the ray and the construction 54 is detected. If the casting angle is 40 degrees, a cross point between the ray and the construction 53 and a cross point between the ray and the construction 54 are detected. Accordingly, if the casting angle is 40 degrees, the cross point between the ray and the construction 53, which is closer to the position of the base station 51, is used. Thus, since the position of the cross point between the ray cast from the base station 51 and the obstacle varies depending on the radiation angle, it can be said that the calculated openness depends on the setting of the casting angle. The casting angle may be set in advance, or may be set to any value according to the performance of the antenna provided on a future base station and/or the size of the cell (cell design) for which the base station provides communication services.

Fig. 5C shows a conceptual diagram of rays that remain without being blocked by the obstacle. The openness calculation unit 104 calculates the ratio of the length of the rays that remain without being blocked by the obstacle (the final length of the rays) to the total length of the rays, as the openness. In other words, the openness calculation unit 104 calculates the openness by using the total length of rays when there is no obstacle (sum total of the lengths of all the rays shown in Fig. 5A) as the denominator and the total length of rays that remain without being blocked by the obstacle (sum total of the final lengths of the rays shown in Fig. 5C) as the numerator. As described above, since the calculated openness can depend on the setting of the casting angle, the openness calculation unit 104 may set a plurality of casting angles and calculate the openness for each of the casting angles.

The openness calculation unit 104 calculates the openness of the open area estimated by the estimation unit 102 and outputs the calculated openness to the determination unit 105. If there are a plurality of open areas estimated by the estimation unit 102, the openness calculation unit 104 calculates the openness of each of the open areas and outputs the calculated openness to the determination unit 105.

### Determination of Site Appropriate for Base Station Placement

The determination unit 105 determines, based on the openness of the open area calculated by the openness calculation unit 104, whether or not the open area is a site appropriate for base station placement. The determination unit 105 may determine an open area whose openness is higher than a predetermined threshold as the site appropriate for base station placement. Alternatively, the determination unit 105 may set various conditions other than the openness and may determine an open area that satisfies the conditions as the site appropriate for base station placement. The conditions include, for example, the width of a road adjacent to the open area (large width, e.g., 5 meters or more or small width, e.g., 2 meters or more and less than 5 meters) and the distance (greater than or equal to a predetermined value or less than the value) between a future base station and an existing base station.

Also, the determination unit 105 may sort the open area into one of a plurality of categories based on the value of the openness. In this case, various conditions, such as the width of a road adjacent to the open area and the distance between a future base station and an existing base station, may be taken into consideration. For example, the determination unit 105 may sort an open area whose openness is 0.75 or more into an excellent candidate category, and an open area whose openness is 0.6 or more and less than 0.75 into a satisfied candidate category.

Note that, in the present embodiment, the open area estimated by the open area prediction model 111 is defined as a parking area, but if the estimated open area is defined as the roof of a building, different conditions for determination by the determination unit 105 may be used. For example, in addition to the determination conditions for the case of a parking area, the height of the building may be taken into consideration.

### Flow of Overall Processing

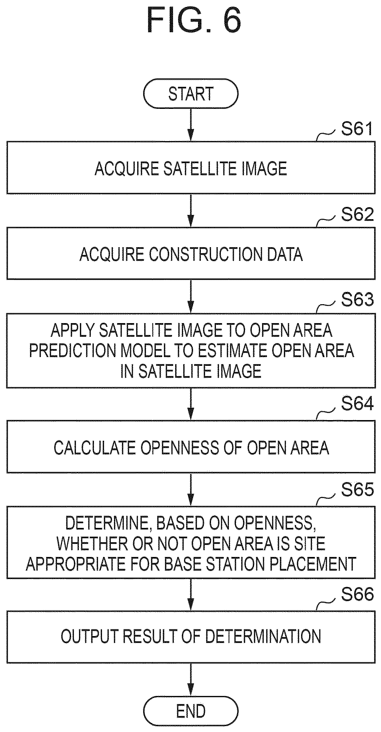

The following will describe a flow of overall processing performed by the information processing apparatus 10 according to the present embodiment. Fig. 6 is a flowchart of processing executed by the information processing apparatus 10. Note that the flowchart shown in Fig. 6 can be realized by the CPU 21 of the information processing apparatus 10 executing a control program stored in the ROM 22 or the RAM 23 and executing operation and processing on information as well as control of the pieces of hardware.

In step S61, the image data acquisition unit 101 acquires a satellite image of an area where a base station is planned to be placed. For example, the image data acquisition unit 101 acquires the satellite image by downloading it from a predetermined website or accepting an input of the image by a user via the input unit 25.

In step S62, the construction data acquisition unit 103 acquires information (construction height data) relating to the height of a construction in an area at least including the area of the satellite image acquired by the image data acquisition unit 101, and altitude data. For example, the construction data acquisition unit 103 acquires the construction data from an external database. The construction height data and the altitude data are associated with position information (e.g., latitude and longitude) with which the position on map data (geographical data) can be identified.

In step S63, the estimation unit 102 applies the satellite image acquired by the image data acquisition unit 101 to the open area prediction model 111 to estimate at least one open area in the satellite image. The processing for estimating the open area is as described above with reference to Figs. 3 and 4.

In step S64, the openness calculation unit 104 calculates the openness of the at least one open area estimated by the estimation unit 102. The processing for calculating the openness is as described above with reference to Figs. 5, and the calculated result is expressed as a numeric value of 0 to 1 or in percentage terms.

In step S65, the determination unit 105 determines, based on the openness of the open area calculated by the openness calculation unit 104, whether or not the open area is a site appropriate for base station placement. As an example, the determination unit 105 determines an open area whose openness is higher than a predetermined threshold as the site appropriate for base station placement. Also, as described above, taking into consideration other conditions (for example, the width of a road adjacent to the open area and the distance between a future base station and an existing base station), the determination unit 105 may determine whether or not the open area is a site appropriate for base station placement.

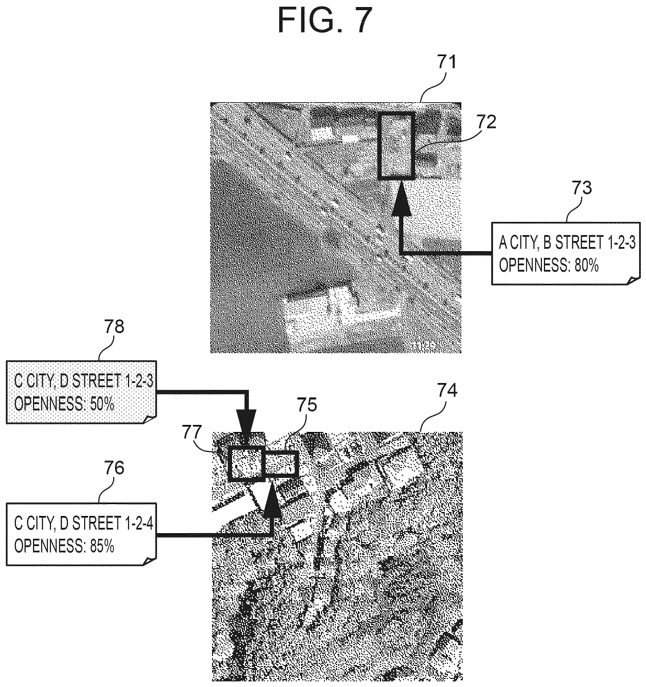

In step S66, the output unit 106 outputs the result of determination by the determination unit 105. For example, the output unit 106 generates information (hereinafter, referred to as "placement candidate information") based on the result of determination by the determination unit 105 and displays the information on the display unit 26. Fig. 7 illustrates examples of placement candidate information displayed on the display unit 26. In the examples of Fig. 7, pieces of placement candidate information 73, 76, and 78 that correspond to the open areas 72, 75, and 77 estimated in a satellite image 72 and a satellite image 74 are shown. Also, in the present example, the predetermined threshold used by the determination unit 105 is defined as 60% (0.6). That is to say, if the openness of an open area is greater than or equal to 60%, the determination unit 105 can determine it is the openness for the site appropriate for base station placement.

In Fig. 7, the openness of the open area 72 estimated in the satellite image 71 is 80% (0.8), and thus the open area 72 is determined as being a site appropriate for base station placement. In this case, for example, the output unit 106 displays the placement candidate information 73, together with the address and the openness of the open area 72.

Also, the openness of the open area 75 estimated in the satellite image 74 is 85% (0.85), and thus the open area 75 is determined as being a site appropriate for base station placement. In this case, for example, the output unit 106 displays the placement candidate information 76, together with the address and the openness of the open area 75.

Even if the openness of an open area is less than the predetermined threshold, the output unit 106 may also display the placement candidate information of this open area. The openness of the open area 77 estimated in the satellite image 74 is 50% (0.5), and thus the open area 77 is determined as being a site inappropriate for base station placement. In this case, for example, the output unit 106 may also display the placement candidate information 78 of the open area 75, in a mode different from the placement candidate information 73 and 76 of the open areas 72 and 75 whose openness are greater than the threshold.

As a result of such placement candidate information being provided, for example, a communication common carrier can take, with respect to a site that has a high openness and is determined as being appropriate for base station placement, a procedure for acquiring this site to place a base station, such as checking the owner of the site.

On the other hand, with respect to a site that has a low openness and is determined as being inappropriate for base station placement, the communication common carrier can proceed with preparations for improvement of the environment of the area in the surroundings of the site, in order to raise the openness, as needed.

As described above, the information processing apparatus according to the present embodiment estimates an open area from a satellite image and calculates the openness of the open area using rays virtually cast in the open area. Then, the information processing apparatus determines, based on the openness, whether or not the open area is appropriate for base station placement. With this, it is possible to effectively and automatically determine a site appropriate for base station placement from a satellite image, resulting in a reduction in processing load for selecting a site appropriate for base station placement from a broad area.

### REFERENCE NUMERALS AND SYMBOLS

10: Information processing apparatus
101: Image data acquisition unit
102: Estimation unit
103: Construction data acquisition unit
104: Openness calculation unit
105: Determination unit
106: Output unit
110: Learning model storage unit
111: Open area prediction model

## Claims

1. An information processing apparatus comprising:
acquisition means (101) for acquiring a satellite image;
estimation means (102) for estimating, in the satellite image, an open area with a spatial extent where base station placement for wireless communication is possible;
calculation means (104) for calculating openness of the open area using rays virtually cast from a predetermined position in the open area; and
determination means (105) for determining, based on the openness, whether or not the open area is a site appropriate for base station placement.

2. The information processing apparatus according to claim 1, wherein the estimation means estimates the open area using a learning model for machine learning.

3. The information processing apparatus according to claim 1 or 2, wherein the open area is a parking area.

4. The information processing apparatus according to claim 1 or 2, wherein the open area is a building roof.

5. The information processing apparatus according to claim 1, wherein the calculation means (104) includes:
setting means (104) for setting the rays virtually cast from the predetermined position having a predetermined height over a predetermined horizontal distance at a predetermined depression angle at intervals of a predetermined azimuthal angle; and
deletion means (104) for, if the virtual rays are blocked by an obstacle, deleting parts of the rays located further than respective cross points between the virtual rays and the obstacle, and
the calculation means (104) calculates a ratio of the sum total of lengths of the remaining parts of the rays after the deletion of the deletion means to the sum total of lengths of the virtual rays, as the openness.

6. The information processing apparatus according to claim 5, wherein the predetermined height is a ground height of a base station planned to be placed.

7. The information processing apparatus according to claim 5, wherein the predetermined depression angle is an angle set based on a size of a cell to which a base station planned to be placed provides a service, and/or performance of an antenna provided in the base station.

8. The information processing apparatus according to any one of claims 5 to 7, wherein if the openness is greater than or equal to a predetermined threshold, the determination means determines the open area as a site appropriate for base station placement.

9. The information processing apparatus according to claim 1, further comprising:
output means (106) for outputting a result of the determination of the determination means.

10. An information processing method executed by an information processing apparatus, comprising the steps of:
an acquisition step (S61) of acquiring a satellite image;
an estimation step (S63) of estimating, in the satellite image, an open area with a spatial extent where base station placement for wireless communication is possible;
a calculation step (S64) of calculating openness of the open area using rays virtually cast from a predetermined position in the open area; and
a determination step (S65) of determining, based on the openness, whether or not the open area is a site appropriate for base station placement.

11. An information processing program for causing a computer to execute information processing, the program causing the computer to execute processing comprising:
an acquisition step (S61) of acquiring a satellite image;
an estimation step (S63) of estimating, in the satellite image, an open area with a spatial extent where base station placement for wireless communication is possible;
a calculation step (S64) of calculating openness of the open area using rays virtually cast from a predetermined position in the open area; and
a determination step (S65) of determining, based on the openness, whether or not the open area is a site appropriate for base station placement.

## Patentansprüche

1. Informationsverarbeitungsvorrichtung, umfassend:
Erfassungsmittel (101), um ein Satellitenbild zu erfassen;
Abschätzungsmittel (102), um im Satellitenbild eine offene Fläche mit einer räumlichen Ausdehnung abzuschätzen, auf der die Positionierung einer Basisstation für drahtlose Kommunikation möglich ist;
Berechnungsmittel (104), um die Offenheit der offenen Fläche unter Verwendung von Strahlen zu berechnen, die von einer vorbestimmten Position in der offenen Fläche virtuell ausgestrahlt werden; und
Bestimmungsmittel (105), um basierend auf der Offenheit zu bestimmen, ob die offene Fläche ein geeigneter Standort für die Positionierung einer Basisstation ist oder nicht.

2. Informationsverarbeitungsvorrichtung nach Anspruch 1, wobei die Abschätzungsmittel die offene Fläche unter Verwendung eines Lernmodells für maschinelles Lernen abschätzen.

3. Informationsverarbeitungsvorrichtung nach Anspruch 1 oder 2, wobei die offene Fläche eine Parkplatzfläche ist.

4. Informationsverarbeitungsvorrichtung nach Anspruch 1 oder 2, wobei die offene Fläche ein Gebäudedach ist.

5. Informationsverarbeitungsvorrichtung nach Anspruch 1, wobei die Berechnungsmittel (104) Folgendes einschließen:
Einstellungsmittel (104), um die von der vorbestimmten Position virtuell ausgestrahlten Strahlen so einzustellen, dass sie eine vorbestimmte Höhe über eine vorbestimmte horizontale Entfernung in einem vorbestimmten Absenkungswinkel in Abständen eines vorbestimmten Azimutwinkels aufweisen; und
Löschmittel (104), um, wenn die virtuellen Strahlen durch ein Hindernis blockiert werden, Teile der Strahlen zu löschen, die weiter als jeweilige Schnittpunkte zwischen den virtuellen Strahlen und dem Hindernis gelegen sind, und
wobei die Berechnungsmittel (104) ein Verhältnis der Gesamtsumme von Längen der verbleibenden Teile der Strahlen nach Löschen der Löschmittel zur Gesamtsumme von Längen der virtuellen Strahlen als die Offenheit berechnen.

6. Informationsverarbeitungsvorrichtung nach Anspruch 5, wobei die vorbestimmte Höhe eine Bodenhöhe einer für die Positionierung geplanten Basisstation ist.

7. Informationsverarbeitungsvorrichtung nach Anspruch 5, wobei der vorbestimmte Absenkungswinkel ein Winkel ist, der basierend auf einer Größe einer Zelle, der die für die Positionierung geplante Basisstation einen Dienst bereitgestellt, und/oder Leistung einer in der Basisstation bereitgestellten Antenne eingestellt wird.

8. Informationsverarbeitungsvorrichtung nach einem der Ansprüche 5 bis 7, wobei, wenn die Offenheit größer oder gleich groß ist wie ein vorbestimmter Schwellenwert, die Bestimmungsmittel die offene Fläche als einen für die Positionierung einer Basisstation geeigneten Standort bestimmen.

9. Informationsverarbeitungsvorrichtung nach Anspruch 1, weiter umfassend:
Ausgabemittel (106), um ein Ergebnis der Bestimmung der Bestimmungsmittel auszugeben.

10. Informationsverarbeitungsverfahren, das von einer Informationsverarbeitungsvorrichtung ausgeführt wird und folgende Schritte umfasst:
einen Erfassungsschritt (S61) des Erfassens eines Satellitenbilds;
einen Abschätzungsschritt (S63) des Abschätzens einer offenen Fläche mit einer räumlichen Ausdehnung im Satellitenbild, auf der Positionierung einer Basisstation für drahtlose Kommunikation möglich ist;
einen Berechnungsschritt (S64) des Berechnens von Offenheit der offenen Fläche unter Verwendung von Strahlen, die von einer vorbestimmten Position in der offenen Fläche virtuell ausgestrahlt werden; und
einen Bestimmungsschritt (S65) des Bestimmens basierend auf der Offenheit, ob die offene Fläche ein geeigneter Standort für die Positionierung einer Basisstation ist oder nicht.

11. Informationsverarbeitungsprogramm, um zu bewirken, dass ein Computer Informationsverarbeitung ausführt, wobei das Programm bewirkt, dass der Computer Verarbeitung ausführt, die Folgendes umfasst:
einen Erfassungsschritt (S61) des Erfassens eines Satellitenbilds;
einen Abschätzungsschritt (S63) des Abschätzens einer offenen Fläche mit einer räumlichen Ausdehnung im Satellitenbild, auf der Positionierung einer Basisstation für drahtlose Kommunikation möglich ist;
einen Berechnungsschritt (S64) des Berechnens von Offenheit der offenen Fläche unter Verwendung von Strahlen, die von einer vorbestimmten Position in der offenen Fläche virtuell ausgestrahlt werden; und
einen Bestimmungsschritt (S65) des Bestimmens basierend auf der Offenheit, ob die offene Fläche ein geeigneter Standort für die Positionierung einer Basisstation ist oder nicht.

## Revendications

1. Appareil de traitement d'informations comprenant : un moyen d'acquisition (101) pour acquérir une image satellite ;
un moyen d'estimation (102) pour estimer, dans l'image satellite, une surface ouverte avec une étendue spatiale où un placement de station de base pour une communication sans fil est possible ;
un moyen de calcul (104) pour calculer une ouverture de la surface ouverte en utilisant des rayons virtuellement projetés à partir d'une position prédéterminée dans la surface ouverte ; et
un moyen de détermination (105) pour déterminer, sur la base de l'ouverture, si la surface ouverte est ou non un site approprié pour un placement de station de base.

2. Appareil de traitement d'informations selon la revendication 1, dans lequel le moyen d'estimation estime la surface ouverte en utilisant un modèle d'apprentissage pour un apprentissage automatique.

3. Appareil de traitement d'informations selon la revendication 1 ou 2, dans lequel la surface ouverte est une zone de stationnement.

4. Appareil de traitement d'informations selon la revendication 1 ou 2, dans lequel la surface ouverte est un toit de bâtiment.

5. Appareil de traitement d'informations selon la revendication 1, dans lequel le moyen de calcul (104) comporte :
un moyen de réglage (104) pour régler les rayons virtuellement projetés à partir de la position prédéterminée présentant une hauteur prédéterminée sur une distance horizontale prédéterminée au niveau d'un angle de dépression prédéterminé à des intervalles d'un angle azimutal prédéterminé ; et
un moyen de suppression (104) pour, si les rayons virtuels sont bloqués par un obstacle, supprimer des parties des rayons situées plus loin que des points de croisement respectifs entre les rayons virtuels et l'obstacle, et
le moyen de calcul (104) calcule un rapport de la somme totale de longueurs des parties restantes des rayons après la suppression du moyen de suppression sur la somme totale de longueurs des rayons virtuels, en tant que l'ouverture.

6. Appareil de traitement d'informations selon la revendication 5, dans lequel la hauteur prédéterminée est une hauteur au sol d'une station de base dont un placement est prévu.

7. Appareil de traitement d'informations selon la revendication 5, dans lequel l'angle de dépression prédéterminé est un angle défini sur la base d'une taille d'une cellule à laquelle une station de base dont un placement est prévu fournit un service, et/ou d'une performance d'une antenne prévue dans la station de base.

8. Appareil de traitement d'informations selon l'une quelconque des revendications 5 à 7, dans lequel, si l'ouverture est supérieure ou égale à un seuil prédéterminé, le moyen de détermination détermine la surface ouverte en tant qu'un site approprié pour un placement de station de base.

9. Appareil de traitement d'informations selon la revendication 1, comprenant en outre :
un moyen d'émission en sortie (106) pour émettre en sortie un résultat de la détermination du moyen de détermination.

10. Procédé de traitement d'informations exécuté par un appareil de traitement d'informations, comprenant les étapes suivantes :
une étape d'acquisition (S61) consistant à acquérir une image satellite ;
une étape d'estimation (S63) consistant à estimer, dans l'image satellite, une surface ouverte avec une étendue spatiale où un placement de station de base pour une communication sans fil est possible ;
une étape de calcul (S64) consistant à calculer une ouverture de la surface ouverte en utilisant des rayons virtuellement projetés à partir d'une position prédéterminée dans la surface ouverte ; et
une étape de détermination (S65) consistant à déterminer, sur la base de l'ouverture, si la surface ouverte est ou non un site approprié pour un placement de station de base.

11. Programme de traitement d'informations pour amener un ordinateur à exécuter un traitement d'informations, le programme amenant l'ordinateur à exécuter un traitement comprenant :
une étape d'acquisition (S61) consistant à acquérir une image satellite ;
une étape d'estimation (S63) consistant à estimer, dans l'image satellite, une surface ouverte avec une étendue spatiale où un placement de station de base pour une communication sans fil est possible ;
une étape de calcul (S64) consistant à calculer une ouverture de la surface ouverte en utilisant des rayons virtuellement projetés à partir d'une position prédéterminée dans la surface ouverte ; et
une étape de détermination (S65) consistant à déterminer, sur la base de l'ouverture, si la surface ouverte est ou non un site approprié pour un placement de station de base.
